# EUROPEAN PATENT APPLICATION

(11) **EP 4 170 981 A1**
(43) Date of publication of application: **26.04.2023**
(21) Application number: 22201972.1
(22) Date of filing: 17.10.2022
(51) Int. Cl.: H04L 12/66

(54) **CONTROL SYSTEM, CONTROL METHOD, AND NON-TRANSITORY COMPUTER READABLE STORAGE MEDIUM**

(30) Priority: 19.10.2021 JP 2021170955
(71) Applicant: Yokogawa Electric Corporation, Musashino-shi Tokyo 180-8750 (JP)
(72) Inventor: FUJIWARA, Takumi, Musashino-shi (JP); YAMAGUCHI, Yasunori, Musashino-shi (JP); YOSHIWARA, Kyouko, Musashino-shi (JP)
(74) Representative: Osha Liang

(57) **Abstract**

A control system (1) includes: a first gateway device (100; 100a) including: a virtual switch processor (113) configured to connect a cloud virtual network (10) to a wide area network and configure a control virtual network (30) within the cloud virtual network (10), and a first protocol converter (114) configured to be connected to the wide area network and convert communication data received from the cloud virtual network (10) based on a proprietary protocol; and a second gateway device (200) including: a second protocol converter (214) configured to connect a local control network (20) to the wide area network and decode the communication data received via the wide area network and converted by the first gateway device (100; 100a).

## Description

### BACKGROUND

### Technical Field

The present invention relates to a control system, a control method, and a non-transitory computer readable storage medium.

Priority is claimed on Japanese Patent Application No. 2021-170955, filed on October 19, 2021, the contents of which are incorporated herein by reference.

### Description of Related Art

In recent years, it has become possible to provide various services due to a cloud system by virtualizing resources such as servers and networks using various virtualization technologies. Conventionally, various technologies for improving convenience of such virtualization technologies have been proposed. For example, a technology for suppressing depletion of VLAN-ID when cloud bases are connected to each other via a virtual private network (VPN) has been proposed (see, for example, Japanese Patent No. 5679343). Also, for example, a technology that enables or causes a virtual node to be migrated without interrupting the service executed by the virtual node in a virtual network that spans a plurality of domains has been proposed (see, for example, Japanese Patent No. 5835846).

Spread of such a virtualization technology is no exception even in control systems such as plants. For example, connecting a control system of each user to a cloud system via a VPN, enabling the control system of each user to be operated from the cloud system, and the like are performed. However, in plant control, a high level of availability in terms of performance, function, and management is often required, and there have been cases in which conventional virtualization technologies cannot meet such requirements.

### SUMMARY

According to an aspect of the present disclosure, a control system is provided. The control system may include: a first gateway device including a virtual switch processor configured to connect a cloud virtual network to a wide area network, and configured to further configure a control virtual network within the cloud virtual network, and a first protocol converter configured to be connected to the wide area network, and convert communication data received from the cloud virtual network in accordance with or based on a proprietary protocol; and a second gateway device including a second protocol converter configured to connect a local control network to the wide area network, and decode the communication data received via the wide area network and converted by the first gateway device.
Further aspects of the present disclosure are directed to a control method and a non-transitory computer readable storage medium as defined in the claims.
A still further aspect of the present disclosure is directed to a computer program comprising instructions which, when the program is executed by a computer, cause the computer to perform the steps of any one of the embodiments of the method herein described.

Further features and aspects of the present disclosure will become apparent from the following detailed description of exemplary embodiments with reference to the attached drawings.

### BRIEF DESCRIPTION OF THE DRAWINGS

FIG. 1 is a diagram showing an example of a system configuration of a plant control system of a first embodiment.
FIG. 2 is a diagram showing an example of a functional configuration of a first gateway device according to the first embodiment.
FIG. 3 is a diagram showing an example of a functional configuration of a second gateway device according to the first embodiment.
FIG. 4 is a diagram showing an example of communication performed by a virtual machine in a control virtual network in the plant control system of the first embodiment.
FIG. 5 is a diagram showing an example of a functional configuration of a first gateway device according to a second embodiment.
FIG. 6 is a diagram showing an example of communication performed when a new virtual machine is added in a control virtual network in a plant control system of the second embodiment.
FIG. 7 is a diagram showing a configuration example of a conventional plant control system that includes a cloud environment as a part of its configuration.

### DETAILED DESCRIPTION

The embodiments of the present invention will be now described herein with reference to illustrative preferred embodiments. Those skilled in the art will recognize that many alternative preferred embodiments can be accomplished using the teaching of the present invention and that the present invention is not limited to the preferred embodiments illustrated herein for explanatory purposes.

An aspect of the present invention is to provide a control system, a control method, a computer program and a non-transitory computer readable storage medium capable of improving availability of a control system that may include a cloud environment as a part of its configuration.

Hereinafter, a plant control system according to embodiments of the present invention will be described with reference to the drawings. Hereinafter, an outline of the embodiments of the present invention will be described first, and then details of the embodiments of the present invention will be described.

### (Summary)

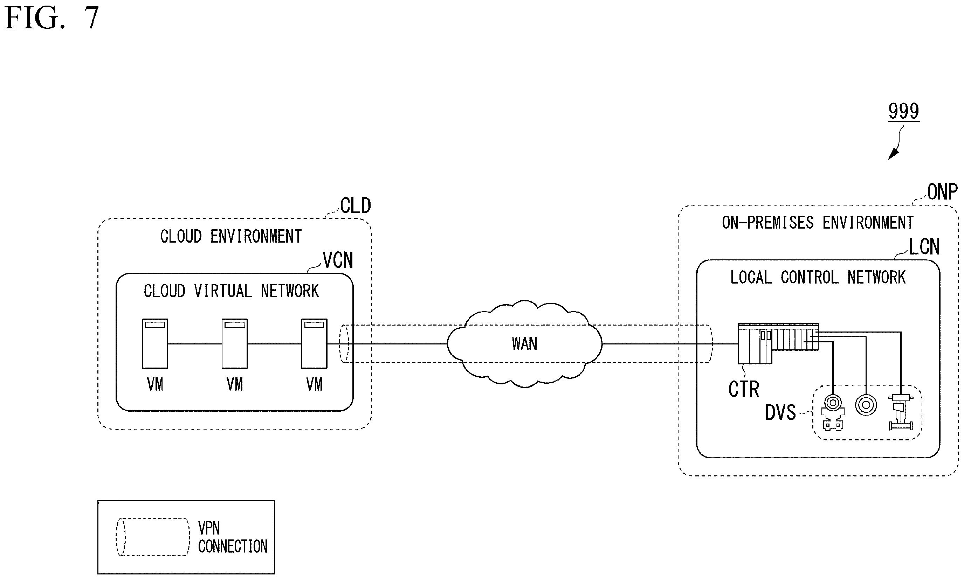

FIG. 7 is a diagram showing a configuration example of a conventional plant control system 999 that includes a cloud environment as a part of its configuration. The plant control system 999 has a configuration in which a cloud virtual network VCN configured in a cloud environment CLD and a local control network LCN configured in a user's on-premises environment ONP are connected by a virtual private network (VPN) via a wide area network (WAN). The WAN may be the Internet or a leased line. For example, the local control network LCN includes a device group DVS such as devices to be controlled and various sensors and a controller CTR, and has a configuration in which the controller CTR controls the devices to be controlled on the basis of measured values of the various sensors, or the like. Also, for example, the cloud virtual network VCN includes a plurality of virtual machines VM, and has a configuration in which the plurality of virtual machines VM provide services of various types such as a state display, remote control, and the like of the local control network LCN on the basis of control information of various types acquired from the controller CTR via the VPN.

In the plant control system 999 having such a conventional configuration, there is a likelihood that a speed and responsiveness of communication will decrease due to an overhead of VPN processing. Therefore, it is difficult to apply the plant control system 999 to a plant control that requires high responsiveness. Also, in a cloud environment CLDD provided by a cloud provider, there are cases in which communication means such as multicast and broadcast are not usable. Therefore, it is difficult to apply the plant control system 999 to the plant control that requires those communication means. As described above, the plant control system 999 having the conventional configuration may not be able to meet the demand of the plant control in terms of performance and function.

Also, in the plant control system 999 having the conventional configuration, there are cases in which a virtual machine needs to be added to the cloud virtual network VCN to expand the system. In this case, in order to incorporate the added virtual machine into the plant control system 999, it is necessary to make appropriate network settings for each virtual machine, but in the conventional plant control system 999, the setting work needed to be manually performed by the user for each virtual machine. Since time and effort of such manual work increases according to the number of added virtual machines, the burden of setting work tends to increase as the system scale becomes larger. Generally, there are a large number of devices to be managed or controlled in a plant control system, and the system scale tends to be larger than that in systems of other types. Therefore, the plant control system 999 having the conventional configuration may not be able to meet the demand of plant control in terms of management.

Embodiments of the present invention are directed to solving the above-described problems by each of the aspects defined in the independent claims. For example, the above-described problems may be solved by disposing a dedicated gateway device in each of a cloud environment and an on-premises environment in a plant control system that includes a cloud environment as a part of its configuration. Hereinafter, embodiments of the present invention will be described in more detail.

### (First embodiment)

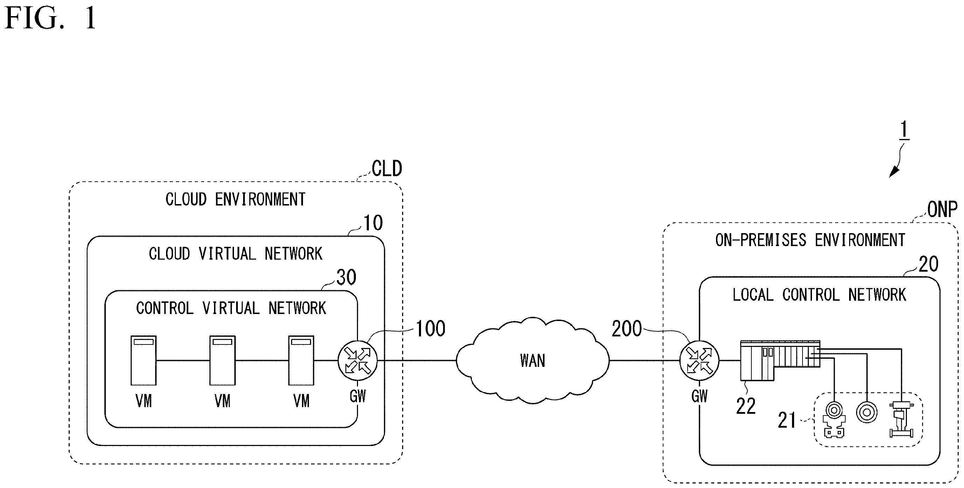

FIG. 1 is a diagram showing an example of a system configuration of a plant control system 1 of a first embodiment. The plant control system 1 has a configuration in which a cloud virtual network 10 (first virtual network) configured in a cloud environment CLD and a local control network 20 (control network) built into an on-premises environment ONP of a user are connected by a wide area network (WAN). A cloud environment CLD is a cloud system operated by a cloud provider, and the cloud virtual network 10 is configured by the cloud provider using a part of resources of the cloud system and is provided to the user.

The cloud virtual network 10 is provided to a user as a system including, for example, one or more virtual machines (VMs) and a first gateway device 100. In the example of FIG. 1, three virtual machines are included in the cloud virtual network 10. The virtual machines are each connected to a virtual switch (not shown) and can communicate with each other through the virtual switch. At least a virtual processor, a virtual memory, and a virtual network interface are assigned to each virtual machine. Further, the number of virtual machines provided to the user as the cloud virtual network 10 may be two or less, or four or more.

The first gateway device 100 is an information processing device provided as a physical machine by the cloud provider. The first gateway device 100 has a function of configuring a new virtual network for control (control virtual network 30, second virtual network) on the virtual network in the cloud virtual network 10. For example, the first gateway device 100 is connected to a physical switch (not shown) in the cloud environment CLD, and can be connected to a physical server (not shown) that provides each virtual machine via the physical switch. The first gateway device 100 is connected to be able to communicate with each virtual machine VM by the physical server. Each virtual machine VM is connected to the control virtual network 30, and each virtual machine can perform communication by broadcast or multicast in the control virtual network 30.

Also, the first gateway device 100 performs communication with a second gateway device 200 disposed in the local control network 20 of the on-premises environment ONP by a proprietary protocol that does not use a VPN. The proprietary protocol is a protocol optimized for control communication and has an encryption function of communication. Specifically, the proprietary protocol is a protocol for reversibly converting a plaintext string into a string that cannot be deciphered at first sight by a third party. The proprietary protocol is, for example, an encryption protocol.

The local control network 20 is configured as a system including, for example, a device group 21 such as devices to be controlled and various sensors, a controller 22, and the second gateway device 200. The device group 21 and the controller 22 are the same as the device group DVS and the controller CTR in the plant control system 999 having the conventional configuration described with reference to FIG. 1. The controller 22 is connected to the second gateway device 200 and can communicate with the cloud virtual network 10 via the second gateway device 200.

The second gateway device 200 is an information processing device that functions as a gateway of the local control network 20 in the on-premises environment ONP. The second gateway device 200 is configured as a physical machine. The second gateway device 200 is connected to the controller 22 and relays communication between the cloud virtual network 10 and the controller 22. Also, the second gateway device 200 performs communication with the first gateway device 100 disposed in the cloud virtual network 10 of the cloud environment CLD by the above-described proprietary protocol.

As described above, the plant control system 1 of the first embodiment has a configuration in which the first gateway device 100 configures the control virtual network 30 in the cloud virtual network 10, and the first gateway device 100 and the second gateway device 200 relay communication with the proprietary protocol that does not use a VPN. Hereinafter, configurations of the first gateway device 100 and the second gateway device 200 will be described in more detail.

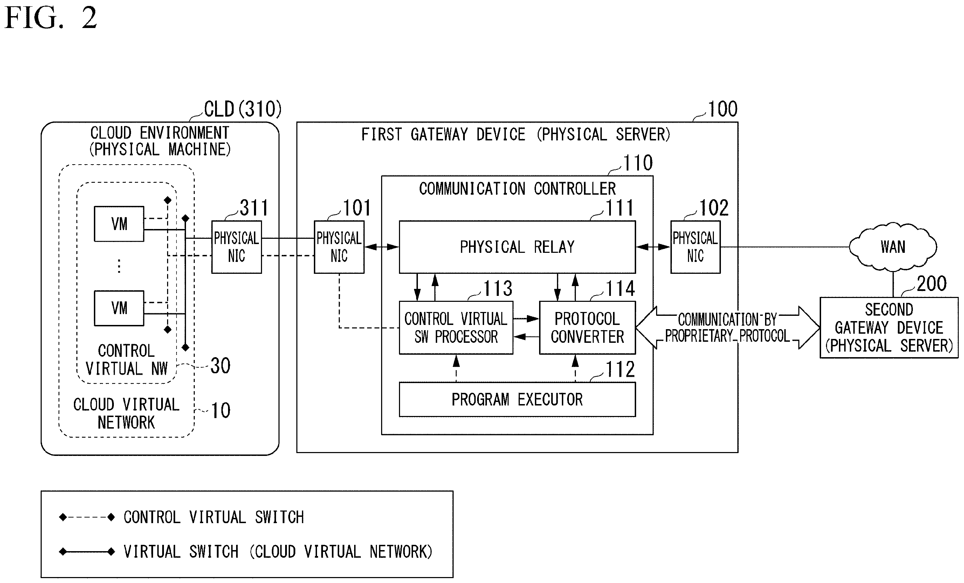

FIG. 2 is a diagram showing an example of a functional configuration of the first gateway device 100. The first gateway device 100 includes a central processing unit (CPU), a memory, an auxiliary storage device, and the like connected by a bus, and executes a program. The first gateway device 100 functions as a device including a first physical NIC 101, a second physical NIC 102, and a communication controller 110 by executing the program. Further, all or part of each function of the communication controller 110 may be realized by using hardware such as an application specific integrated circuit (ASIC), a programmable logic device (PLD), or a field programmable gate array. The program may be recorded on a computer-readable recording medium. The computer-readable recording medium refers to a portable medium such as, for example, for example, a flexible disk, a magneto-optical disk, a ROM. or a CD-ROM, and a storage device such as a hard disk incorporated in a computer system. The program may be transmitted via a telecommunication line.

The first physical NIC 101 is a communication interface (network interface card (NIC)) for the first gateway device 100 to communicate with a physical machine 310 configuring the cloud environment CLD. Further, the physical machine 310 includes a physical NIC 311 and can communicate with the first gateway device 100 via the physical NIC 311.

The second physical NIC 102 is a communication interface for connecting the first gateway device 100 to the WAN. The second physical NIC 102 can communicate with the second gateway device 200 via the WAN.

The communication controller 110 has a function of controlling communication of the first gateway device 100. The communication controller 110 includes, for example, a physical relay 111, a program executor 112, a control virtual switch processor 113 (virtual switch processor), and a protocol converter 114 (first protocol converter).

The physical relay 111 has a function of relaying communication between the first physical NIC 101 and the second physical NIC 102. The physical relay 111 links up communication in the control virtual network 30 with the control virtual switch processor 113, and links up communication with the on-premises environment ONP with the protocol converter 114. In other words, the physical relay 111 links up communication acquired from the first physical NIC 101 with the control virtual switch processor 113, and links up communication acquired from the control virtual switch processor 113 with the first physical NIC 101. Also, the physical relay 111 links up communication acquired from the second physical NIC 102 with the protocol converter 114, and links up communication acquired from the protocol converter 114 with the second physical NIC 102.

The program executor 112 has a function of generating the control virtual switch processor 113 and the protocol converter 114 by executing a program. The program may be different between the control virtual switch processor 113 and the protocol converter 114, or may be one program. The program executor 112 may execute the program when the first gateway device 100 is started, or may execute the program when a predetermined operation is input after the first gateway device 100 is started. The program may be stored in the first gateway device 100 in advance, or may be received from another communication device at the time of execution.

The control virtual switch processor 113 provides a virtual switch function for connecting each virtual machine included in the cloud virtual network 10 configured in the cloud environment CLD to the control virtual network 30. Conceptually, the control virtual switch processor 113 operates to generate a pseudo virtual switch inside the control virtual network 30 of the cloud environment CLD. For example, this operation can be realized by the following method.
(1) In each virtual machine of the cloud virtual network 10, a virtual NIC for the control virtual network 30 (hereinafter referred to as "control virtual NIC") is created on a virtual NIC provided by the cloud environment CLD.
(2) Each virtual machine communicates via the control virtual NIC. This communication is transferred to the first gateway device 100, and switching processing is performed by the control virtual switch processor 113.
(3) For example, when communication of the source virtual machine is broadcast, the control virtual switch processor 113 can realize the broadcast by transferring the communication to all virtual machines in the control virtual network 30 other than the source virtual machine.
(4) For example, when communication of the source virtual machine is multicast, the control virtual switch processor 113 can realize the multicast by transferring the communication to a virtual machine belonging to a designated multicast group.

On the other hand, when the control virtual switch processor 113 receives communication to the on-premises environment ONP from the control virtual network 30, the control virtual switch processor 113 transfers the communication to the protocol converter 114.

The protocol converter 114 has a function of converting, by a proprietary protocol, communication data based on a communication protocol which is generally used and which is used for the communication to the on-premises environment ONP transmitted from the control virtual network 30. Specifically, the protocol converter 114 reversibly converts, in accordance with the proprietary protocol, the communication data, for the on-premise environment ONP, which is based on a generally used communication protocol, and which is transmitted from the control virtual network 30. The converted communication data loses its readability even if it is decoded based on the generally used protocol. With this function, the first gateway device 100 can perform the communication with the second gateway device 200 via the WAN using the proprietary protocol optimized for the control communication.

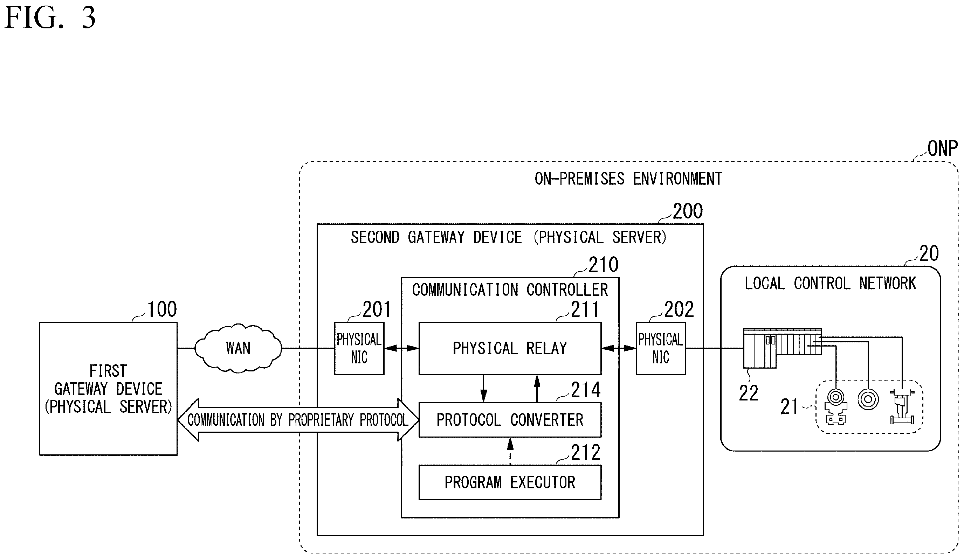

FIG. 3 is a diagram showing an example of a functional configuration of the second gateway device 200. The second gateway device 200 includes a CPU, a memory, an auxiliary storage device, and the like connected by a bus, and executes a program. The second gateway device 200 functions as a device including a first physical NIC 201, a second physical NIC 202, and a communication controller 210 by executing the program. Further, all or a part of each function of the communication controller 210 may be realized by using hardware such as ASIC, PLD, or FPGA. The program may be recorded on a computer-readable recording medium. The computer-readable recording medium refers to a portable medium such as, for example, for example, a flexible disk, a magneto-optical disk, a ROM, or a CD-ROM, and a storage device such as a hard disk incorporated in a computer system. The program may be transmitted via a telecommunication line.

The first physical NIC 201 is a communication interface for connecting the second gateway device 200 to the WAN. The first physical NIC 201 can communicate with the first gateway device 100 via the WAN.

The second physical NIC 202 is a communication interface for the second gateway device 200 to communicate with the local control network 20.

The communication controller 210 has a function of controlling communication of the second gateway device 200. The communication controller 210 includes, for example, a physical relay 211, a program executor 212, and a protocol converter 214 (second protocol converter).

The physical relay 211 has a function of relaying communication between the first physical NIC 201 and the second physical NIC 202. The physical relay 211 links up communication with the first gateway device 100 with the protocol converter 214.

The program executor 212 has a function of generating the protocol converter 214 by executing a program. The program executor 212 may execute the program when the second gateway device 200 is started, or may execute the program when a predetermined operation is input after the second gateway device 200 is started. The program may be stored in the second gateway device 200 in advance, or may be received from another communication device at the time of execution.

The protocol converter 214 has a function of converting, by a proprietary protocol, communication data based on a communication protocol which is generally used and which is used for communication to the cloud environment CLD transmitted from the local control network 20. Specifically, the protocol converter 214 reversibly converts, in accordance with the proprietary protocol, communication data for the cloud environment CLD transmitted from the local control network 20. The converted communication data loses its readability even if it is decoded based on the generally used protocol. With this function, the second gateway device 200 can perform the communication with the first gateway device 100 via the WAN using the proprietary protocol optimized for the control communication.

The communication data converted by the protocol converter 114 and the protocol converter 214 according to the proprietary protocol is decoded into plain text by the protocol converter 114 and the protocol converter 214 that received the communication data. Therefore, normal data processing can be performed by the devices downstream from the protocol converter 114 and the protocol converter 214.

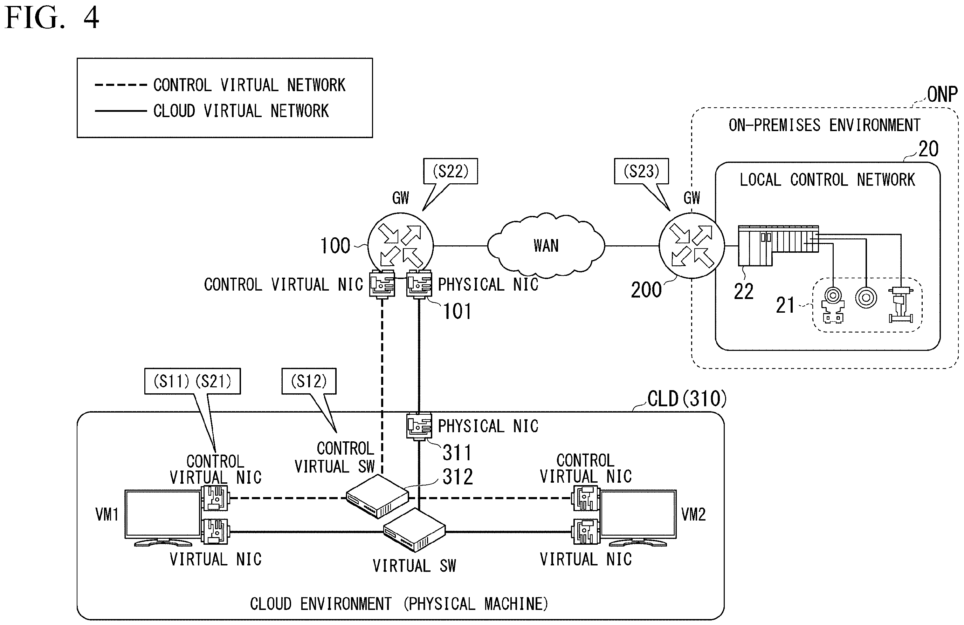

FIG. 4 is a diagram showing an example of communication performed by a virtual machine in the control virtual network 30 in the plant control system 1 of the first embodiment. Here, a flow of communication performed by a virtual machine VM1 in the control virtual network 30 with a virtual machine VM2 in the same control virtual network 30, and a flow of communication performed by the virtual machine VM1 with the controller 22 on the on-premises environment ONP side will be described.

### (Communication between virtual machines)

First, communication to the virtual machine VM2 via the control virtual NIC is generated in the virtual machine VM1 (step S11). In this case, the virtual machine VM1 starts communication addressed to the virtual machine VM2 using the control virtual NIC, but the communication is actually transferred to the first gateway device 100 via the virtual NIC, switched by the control virtual switch function of the first gateway device 100, and returned to the virtual machine VM2. That is, as an image, a virtual control switch (control virtual switch 312) is configured in the cloud virtual network 10 by the first gateway device 100, and this control virtual switch transfers the communication of the virtual machine VM1 to the virtual machine VM2 (step S12).

### (Communication between virtual machine and controller)

First, communication to the virtual machine VM2 via the control virtual NIC is generated in the virtual machine VM1 (step S21). In this case, the virtual machine VM1 starts communication addressed to the controller 22 using the control virtual NIC, but the communication is transferred to the first gateway device 100 by the control virtual switch 312. The first gateway device 100 converts, by the protocol converter 114 by using the proprietary protocol, communication data based on a protocol of the communication, and performs communication with the second gateway device 200 (step S22). The second gateway device 200 transfers the communication received from the first gateway device 100 by the proprietary protocol to the controller 22 of the local control network 20 (step S23). At this time, the protocol converter 214 transfers the communication to the controller 22 as if the communication has been transmitted from the virtual machine VM1 in the control virtual network 30.

In the plant control system 1 of the first embodiment configured as described above, the first gateway device 100 configures the control virtual network 30 using the resources of the cloud virtual network 10, and thereby each virtual machine of the cloud virtual network 10 can perform communication using the multicast or the broadcast in the control virtual network 30 . Also, in the plant control system 1 of the first embodiment, the first gateway device 100 communicates with the second gateway device 200 on the on-premises environment ONP side using the proprietary protocol optimized for control communication, and thereby a delay in control communication between the cloud environment and the on-premises environment can be reduced. That is, according to the plant control system 1 of the first embodiment, it is possible to improve availability of the plant control system 1 that includes a cloud environment as a part of its configuration.

### <Modified example>

Further, in the first embodiment, a case in which the first gateway device 100 and the second gateway device 200 are configured as physical machines has been described, but either or both of the first gateway device 100 and the second gateway device 200 may be configured as virtual machines. For example, the first gateway device 100 may be configured as a virtual machine in the cloud virtual network 10, and the second gateway device 200 may be configured as a virtual machine on the physical machine in the on-premises environment ONP.

Also, in the first embodiment, any virtualization technology may be used for a method of configuring the control virtual network 30 on the cloud virtual network 10. For example, the control virtual network 30 may be configured by tunneling between a VPN server and a VPN client by using the control virtual switch processor 113 as the VPN server and using each virtual machine in the cloud virtual network 10 as the VPN client.

### (Second embodiment)

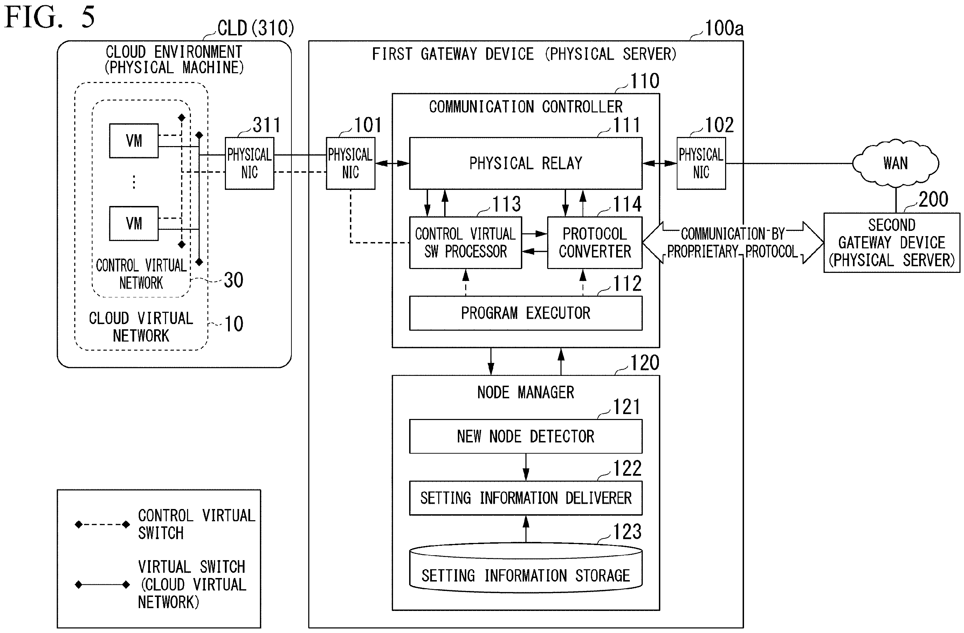

FIG. 5 is a diagram showing an example of a functional configuration of a first gateway device 100a according to a second embodiment. A plant control system 1 of the second embodiment is different from the plant control system 1 of the first embodiment in that the first gateway device 100a is provided in place of the first gateway device 100, but the other configurations are the same as those of the plant control system 1 of the first embodiment. The first gateway device 100a is different from the first gateway device 100 in the first embodiment in that it further includes a node manager 120. Other configurations are the same as those of the first gateway device 100 in the first embodiment.

The node manager 120 may be implemented by a processor comprising a CPU and has a function of managing virtual machines in a control virtual network 30. For example, the node manager 120 includes a new node detector 121, a setting information deliverer (or setting information transmitter) 122, and a setting information storage 123.

The new node detector 121 has a function of detecting that a new virtual machine has been added in a cloud virtual network 10. For example, the new node detector 121 may be a dynamic host configuration protocol (DHCP) server that assigns IP addresses to virtual machines in the cloud virtual network 10. In this case, the new node detector 121 can detect that a new virtual machine (new node) has been added when an IP address assignment request is received from a new media access control (MAC).

The setting information deliverer 122 has a function of delivering or transmitting network setting information for making the new node detected by the new node detector 121 join to the control virtual network 30. For example, the setting information includes an IP address, a network address, a default gateway, routing information, and the like.

The setting information storage 123 is configured by using a storage device such as a magnetic hard disk device or a semiconductor storage device. The setting information storage 123 stores network setting information delivered by the setting information deliverer 122, management information of the virtual machine added to the control virtual network 30, and the like.

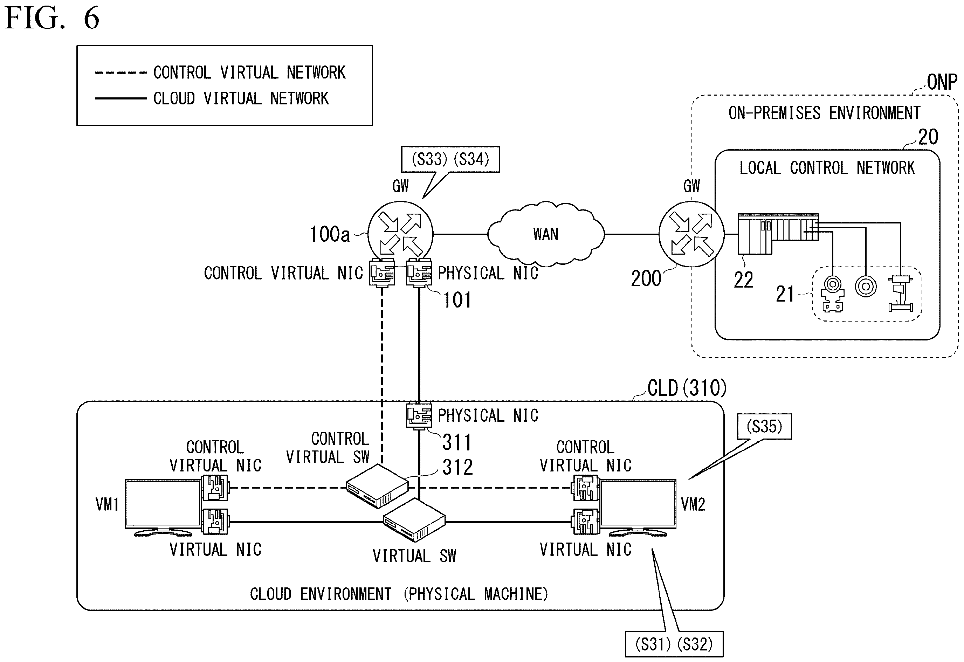

FIG. 6 is a diagram showing an example of communication performed when a new virtual machine is added in the control virtual network 30 in the plant control system 1 of the second embodiment. Here, a case in which a virtual machine VM1 in the control virtual network 30 is an existing node and a virtual machine VM2 is added as a new node in the same control virtual network 30 will be described.

First, the virtual machine VM2 is added as a new node in the cloud virtual network 10 (step S31). Here, the virtual machine VM2 is added to the cloud virtual network 10, but is not added to the control virtual network 30. The added virtual machine VM2 requests the first gateway device 100a to assign an IP address via a virtual NIC using the DHCP function (step S32).

Next, in the first gateway device 100a, the new node detector 121 receives the IP address request from the virtual machine VM2, detects the addition of the new node (step S33), and notifies the setting information deliverer 122 of that. When the setting information deliverer 122 receives the notification of the addition of the new node from the new node detector 121, the setting information deliverer 122 acquires network setting information to be delivered to the new node from the setting information storage 123 and transmits it to the virtual machine VM2 via the virtual NIC (step S34).

Next, in the cloud virtual network 10, the network setting information for joining the virtual machine VM2 to the control virtual network 30 is acquired from the first gateway device 100a via the virtual NIC and reflected in a control virtual NIC (step S35).

In the plant control system 1 of the second embodiment configured in this way, since the first gateway device 100a detects that a new virtual machine has been added to the cloud virtual network 10 and delivers the network setting information for making the added new node join to the control virtual network 30, manual network setting work at the time of system expansion can be omitted. That is, according to the plant control system 1 of the second embodiment, it is possible to improve availability of the plant control system 1 that includes a cloud environment as a part of its configuration.

As described above, the plant control system 1 according to the present embodiment includes the cloud virtual network 10 configured in the cloud environment CLD, the local control network 20 configured in the on-premises environment ONP different from the cloud environment CLD, the first gateway device 100 connecting the cloud virtual network 10 to a WAN, and the second gateway device 200 connecting the local control network 20 to the WAN, in which the first gateway device 100 includes the control virtual switch processor 113 that further configures the control virtual network 30 on the cloud virtual network 10, and the protocol converter 114 that performs a protocol conversion for performing communication suitable for control communication with the second gateway device 200 via the WAN, and the second gateway device 200 includes the protocol converter 214 that performs a protocol conversion for performing communication suitable for the control communication with the first gateway device 100 via the WAN. With this configuration, the plant control system 1 according to the present embodiment uses a proprietary protocol instead of a protocol with a large overhead for control communication such as VPN, and thereby communication optimized for control communication can be realized between the cloud environment CLD and the on-premises environment ONP. Also, with this configuration, the plant control system 1 according to the present embodiment can provide a function that is not provided in the cloud virtual network 10 by a cloud provider in the control virtual network 30.

Also, in the plant control system 1 according to the present embodiment, the control virtual switch processor 113 enables or causes a virtual machine in the control virtual network 30 to communicate (perform communication) by broadcast or multicast. With this configuration, the plant control system 1 according to the present embodiment can provide the virtual machine with a broadcast or multicast communication function that is generally not provided by the cloud virtual network 10.

Further, in the plant control system 1 according to the present embodiment, the first gateway device 100 further includes the new node detector 121 detecting that a new virtual machine has been added to the cloud virtual network 10, and the setting information deliverer 122 delivering network setting information for connecting the new virtual machine to the control virtual network 30 to the new virtual machine detected by the new node detector 121. With this configuration, the plant control system 1 according to the present embodiment can simplify setting work at the time of adding a new node and reduce addition of management of the cloud virtual network 10.

Also, in the plant control system 1 according to the present embodiment, the new node detector 121 detects addition of the new virtual machine by receiving an IP address assignment request from the virtual machine of the cloud virtual network 10, and the setting information deliverer 122 delivers the network setting information to the new virtual machine via the cloud virtual network 10. With this configuration, the plant control system 1 according to the present embodiment can automatically make the virtual machine newly added to the cloud virtual network 10 join to the control virtual network 30.

As described above, according to the plant control system 1 of the present embodiment, it is possible to improve availability of the plant control system 1 that uses the cloud environment as a part of the configuration.

### <Modified example>

In the second embodiment, a case in which the control virtual network 30 is configured on the cloud virtual network 10 has been described, but the method of detecting a new node and automatically connecting it to the control virtual network 30 can also be applied when the control virtual network 30 is configured on the physical network. For example, also in this case, the same control virtual network 30 as described above can be configured by creating virtual NICs in the physical machines and connecting the virtual NICs with a virtual control virtual switch 312.

Also, in the second embodiment, a configuration in which the first gateway device 100a includes both the communication controller 110 and the node manager 120 has been described, but the communication controller 110 and the node manager 120 are not necessarily mounted on one device. For example, the node manager 120 may be mounted on a node management device capable of communicating with the first gateway device 100a. Also, the function of the node manager 120 may also be realized by a program, and in that case, the node manager 120 may be generated by executing a program by the program executor 112.

Also, in the second embodiment, a case in which the first gateway device 100a and the second gateway device 200 are configured as physical machines as in the first embodiment has been described, but either or both of the first gateway device 100a and the second gateway device 200 may be configured as virtual machines.

In the control system, another aspect of the present invention is that the virtual switch processor enables or causes a virtual machine in the second virtual network to communicate by broadcast or multicast.

Also, in the control system, another aspect of the present invention is that the first gateway device further includes: a new node detector (121) configured to detect that a new virtual machine has been added to the first virtual network; and a setting information deliverer (122) configured to deliver, to the new virtual machine detected by the new node detector, network setting information for connecting the new virtual machine to the second virtual network.

Also, in the control system, another aspect of the present invention is that the new node detector detects the new virtual machine by receiving, from a virtual machine of the first virtual network, an IP address assignment request, and the setting information deliverer delivers, to the new virtual machine, the network setting information via the first virtual network.

Also, in the control system, another aspect of the present invention is that at least one of the first gateway device and the second gateway device is configured as virtual machine.

Also, in the control system, another aspect of the present invention is that, when communication of a source virtual machine is broadcast, the virtual switch processor realizes the broadcast by transferring the communication to all virtual machines in the control network other than a source virtual machine.

Also, in the control system, another aspect of the present invention is that, when communication of a source virtual machine is multicast, the virtual switch processor realizes the multicast by transferring the communication to a virtual machine belonging to a designated multicast group.

Also, in the control system, another aspect of the present invention is that, when the virtual switch processor receives communication to an on-premises environment from the control network, the virtual switch processor transfers the communication to the first protocol converter.

Also, in the control system, another aspect of the present invention is that, the first protocol converter converts communication data based on a communication protocol used for communication for an on-premises environment transmitted from the control network, the conversion being performed by a proprietary protocol.

Also, another aspect of the present invention is a control system including: a first virtual network configured in a cloud environment; a control network configured in an environment different from the cloud environment; a first gateway device including a virtual switch processor configured to connect the first virtual network to a wide area network, and configured to further configure a second virtual network on the first virtual network, and a first protocol converter that is connected to the wide area network, and converts communication data received from the second virtual network in accordance with a proprietary protocol; and a second gateway device including a second protocol converter that connects the control network to the wide area network, and decodes the communication data received via the wide area network and converted by the second gateway device.

Also, another aspect of the present invention is a control method including: connecting, by a virtual switch processor, a first virtual network configured in a cloud environment to a wide area network; configuring, by the virtual switch processor, a second virtual network on the first virtual network; converting, by a first gateway device connected to the wide area network, communication data received from the first virtual network in accordance with a proprietary protocol; connecting, by a second gateway device, a control network configured in an environment different from the cloud environment to the wide area network; and decoding, by the second gateway device, the communication data converted by the first gateway device received via the wide area network.

Also, in the control method, another aspect of the present invention is that, the virtual switch processor enables or causes a virtual machine in the second virtual network to communicate by broadcast or multicast.

Also, in the control method, another aspect of the present invention is the control method including: detecting that a new virtual machine has been added to the first virtual network; and delivering, to the new virtual machine detected, network setting information for connecting the new virtual machine to the second virtual network.

Also, in the control method, another aspect of the present invention is the control method further including: detecting the new virtual machine by receiving, from a virtual machine of the first virtual network, an IP address assignment request, and delivering, to the new virtual machine, the network setting information via the first virtual network.

Also, in the control method, another aspect of the present invention is that at least one of the first gateway device and the second gateway device is configured as virtual machine.

Also, still another aspect of the present invention is a non-transitory computer readable storage medium storing a program that makes a computer perform: connecting a first virtual network configured in a cloud environment to a wide area network; configuring a second virtual network on the first virtual network; converting, by a first gateway device connected to the wide area network, communication data received from the first virtual network in accordance with a proprietary protocol; connecting, by a second gateway device, a control network configured in an environment different from the cloud environment to the wide area network; and decoding, by the second gateway device, the communication data converted by the first gateway device received via the wide area network.

Also, in the non-transitory computer readable storage medium, another aspect of the present invention is the non-transitory computer readable storage medium further storing a program that makes a virtual machine in the second virtual network communicate by broadcast or multicast.

Also, in the non-transitory computer readable storage medium, another aspect of the present invention is the non-transitory computer readable storage medium further storing a program that performs: detecting that a new virtual machine has been added to the first virtual network; and delivering, to the new virtual machine detected, network setting information for connecting the new virtual machine to the second virtual network.

Also, in the non-transitory computer readable storage medium, another aspect of the present invention is the non-transitory computer readable storage medium further storing a program that performs: detecting the new virtual machine by receiving, from a virtual machine of the first virtual network, an IP address assignment request, and delivering, to the new virtual machine, the network setting information via the first virtual network.

Also, in the non-transitory computer readable storage medium, another aspect of the present invention is the non-transitory computer readable storage medium further storing a program that makes at least one of the first gateway device and the second gateway device be configured as virtual machine.

According to one or more embodiments of the present invention, it is possible to improve availability of a plant control system that includes a cloud environment as a part of its configuration.

As used herein, the following directional terms "front, back, above, downward, right, left, vertical, horizontal, below, transverse, row and column" as well as any other similar directional terms refer to those instructions of a device equipped with one or more embodiments of the present invention. Accordingly, these terms, as utilized to describe one or more embodiments of the present invention should be interpreted relative to a device equipped with one or more embodiments of the present invention.

The term "configured" is used to describe a component, unit or part of a device includes hardware and/or software that is constructed and/or programmed to carry out the desired function.

Moreover, terms that are expressed as "means-plus function" in the claims should include any structure that can be utilized to carry out the function of that part of one or more embodiments of the present invention.

The term "unit" is used to describe a component, unit or part of a hardware and/or software that is constructed and/or programmed to carry out the desired function. Typical examples of the hardware may include, but are not limited to, a device and a circuit.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

## Claims

1. A control system (1) comprising:
a first gateway device (100; 100a) comprising:
a virtual switch processor (113) configured to connect a cloud virtual network (10) to a wide area network and configure a control virtual network (30) within the cloud virtual network (10), and
a first protocol converter (114) configured to be connected to the wide area network and convert communication data received from the cloud virtual network (10) based on a proprietary protocol; and
a second gateway device (200) comprising:
a second protocol converter (214) configured to connect a local control network (20) to the wide area network and decode the communication data received via the wide area network and converted by the first gateway device (100; 100a).

2. The control system (1) according to claim 1, further comprising the cloud virtual network (10) and the local control network (20), wherein the cloud virtual network (10) is disposed in a cloud environment and the local control network (20) is disposed in an environment different from the cloud environment.

3. The control system (1) according to claim 1 or claim 2, wherein
the virtual switch processor (113) is configured to cause a virtual machine included in the control virtual network (30) to perform communication by broadcast or multicast.

4. The control system (1) according to any one of claims 1-3, wherein
the first gateway device (100; 100a) further comprises:
a new node detector (121) configured to detect a new virtual machine having been added to the cloud virtual network (10); and
a setting information transmitter (122) configured to deliver, to the new virtual machine detected by the new node detector (121), network setting information for connecting the new virtual machine to the control virtual network (30).

5. The control system (1) according to claim 4, wherein
the new node detector (121) is configured to detect the new virtual machine by receiving, from a virtual machine included in the cloud virtual network (10), an IP address assignment request, and
the setting information transmitter (122) is configured to transmit, to the new virtual machine, the network setting information via the cloud virtual network (10).

6. The control system (1) according to any one of claims 1-5, wherein
at least one of the first gateway device (100; 100a) and the second gateway device (200) is configured as a virtual machine.

7. The control system (1) according to any one of claims 1-6, wherein
the virtual switch processor (113) is configured to broadcast communication of a source virtual machine included in the control virtual network (30) by transferring the communication to all virtual machines included in the control virtual network (30) other than the source virtual machine.

8. The control system (1) according to any one of claims 1-6, wherein
the virtual switch processor (113) is configured to multicast communication of a source virtual machine by transferring the communication to a virtual machine belonging to a designated multicast group.

9. The control system (1) according to any of claims 1-8, wherein
upon receiving communication to an on-premises environment from the control virtual network (30), the virtual switch processor (113) is configured to transfer the communication to the first protocol converter (114).

10. The control system (1) according to any one of claims 1-9, wherein
the first protocol converter (114) is configured to convert, by a proprietary protocol, communication data based on a communication protocol used for communication for an on-premises environment transmitted from the control virtual network (30).

11. A control method comprising the steps of:
connecting, by a virtual switch processor (113), a cloud virtual network (10) to a wide area network;
configuring, by the virtual switch processor (113), a control virtual network (30) within the cloud virtual network (10);
converting, by a first protocol converter (114) connected to the wide area network, communication data received from the cloud virtual network (10) based on a proprietary protocol;
connecting, by a second gateway device (200), a local control network (20) to the wide area network; and
decoding, by the second gateway device (200), the communication data converted by the first protocol converter (114) and received via the wide area network.

12. The control method according to claim 11, wherein the cloud virtual network (10) is disposed in a cloud environment and the local control network (20) is disposed in an environment different from the cloud environment.

13. The control method according to claim 11 or claim 12, further comprising:
causing, by the virtual switch processor (113), a virtual machine included in the control virtual network (30) to perform communication by broadcast or multicast.

14. The control method according to any one of claims 11-13, further comprising:
detecting a new virtual machine having been added to the cloud virtual network (10); and
transmitting, to the new virtual machine detected, network setting information for connecting the new virtual machine to the control virtual network (30).

15. The control method according to claim 14, further comprising:
detecting the new virtual machine by receiving, from a virtual machine included in the cloud virtual network (10), an IP address assignment request, and
transmitting, to the new virtual machine, the network setting information via the cloud virtual network (10).

16. The control method according to any one of claims 11-15, wherein
the first protocol converter (114) makes part of a first gateway device (100; 100a), and at least one of the first gateway device (100; 100a) and the second gateway device (200) is configured as a virtual machine.

17. A non-transitory computer readable storage medium storing program instructions which, when executed by a computer, cause the computer to perform the steps of the method of any one of claims 11-16.
